# EUROPÄISCHE PATENTSCHRIFT

(11) **EP 0 761 747 B1**
(45) Veröffentlichungstag und Bekanntmachung des Hinweises auf die Patenterteilung: **21.11.2001**
(21) Anmeldenummer: 96112607.5
(22) Anmeldetag: 05.08.1996
(51) Int. Cl.: C08L 1/28, C09K 17/14, E21D 9/06

(54) **Zubereitungen aus nicht-ionischen und ionischen Hydrokolloiden und deren Verwendung als Hilfsmittel für den Tunnelbau**
Compositions of non-ionic and ionic hydrocolloids and their use as auxiliary agent in tunnel construction
Compositions d'hydrocolloides non-ioniques et ioniques et leur utilisation comme adjuvant pour la construction des tunnels

(30) Priorität: 16.08.1995 DE 19530077
(43) Veröffentlichungstag der Anmeldung: 12.03.1997
(73) Patentinhaber: WOLFF WALSRODE AG, 29655 Walsrode (DE)
(72) Erfinder: Szablikowski, Klaus, Dr., 29664 Walsrode (DE); Lange, Werner, Dr., 27374 Visselhövede (DE); Pannek, Jörn-Bernd, Dr., 29683 Fallingbostel (DE); Kiesewetter, Rene, Dr., 29683 Fallingbostel (DE)
(74) Vertreter: Pettrich, Klaus-Günter, Dr.

(56) Entgegenhaltungen:
- WO-A-91/17210
- US-A- 3 014 808
- DATABASE WPI Week 9140 Derwent Publications Ltd., London, GB; AN 292977 XP002019587 & JP-A-03 059 240 (AOKI KENSETSU KK) , 9.September 1991
- DATABASE WPI Week 9014 Derwent Publications Ltd., London, GB; AN 101888 XP002019588 & JP-A-02 049 893 (NIPPON KOKUDO KAIHA) , 20.Februar 1991
- DATABASE WPI Week 8925 Derwent Publications Ltd., London, GB; AN 182882 XP002019590 & JP-A-01 121 396 (NIHON KOKUDO KAIHAT) , 15.Mai 1989
- DATABASE WPI Week 8710 Derwent Publications Ltd., London, GB; AN 67513 XP002019591 & JP-B-02 018 886 (KUMAGAI GUMI KK) , 27.April 1990
- DATABASE WPI Week 8626 Derwent Publications Ltd., London, GB; AN 167245 XP002019592 & JP-B-63 061 354 (TACHIBANA SHOKAI KK) , 29.November 1988
- DATABASE WPI, Woche 8948, Derwent Publications Ltd., London, GB, Klasse , AN 352227 & JP 1263132

## Beschreibung

Die vorliegende Erfindung beansprucht Hilfsmittel für Bohrspülanwendungen bestehend aus nicht-ionischen und ionischen Hydrokolloiden - insbesondere Polysaccharidethern, bevorzugt Celluloseethern - und oberflächenaktiven Substanzen (Tensiden) und ggf. unveredelten Polysacchariden sowie deren Verwendung als Hilfsmittel beim Tunnelbau, insbesondere beim Tunnelbau mit Schildvortriebssystemen. Ihr Einsatz führt bei mit Erddruck betriebenen Schildsystemen im Vergleich zu herkömmlichen Celluloseethern bzw. Gemischen aus Celluloseethern und Tensiden zu höheren Schaumergiebigkeiten, verbesserten Werten für das Tragevermögen für erbohrtes Erdmaterial sowie günstigeren ökotoxikologischen Werten.

Mit der Verbesserung der innerstädtischen Infrastruktur (U-Bahn-Tunnel, Wasser- und Gasrohrleitungen, Kabel für Telekommunikations, Nachrichtensystemen u. a.) wurden zu Beginn der 60er Jahre eine Reihe von Verfahren für das maschinelle Auffahren von Tunneln in Lockergestein entwickelt, sog. Vortriebsverfahren, mit deren Hilfe erbohrtes Gestein schnell, sicher und kostengünstig ausgetragen werden sollte. Die im Laufe der Jahre immer weiter gestiegenen technischen Anforderungen an derartige Schildsysteme sowie die Anpassung an die jeweils sich ändernden geologischen Bedingungen (Bodenbeschaffenheit u. a.) führten zur Entwicklung vollkommen neuer Methoden auf diesem Gebiet (T. Krause, Diplomarbeit TU Braunschweig, 1987; DE-A-2457187, JP HEI 1-239293, HEI 5-59886, HEI 1-121396). Von den verschiedenen Schildsystemen, die sich z. Z. weltweit im Einsatz befinden, setzen sich immer mehr solche Systeme durch, die mit flüssigkeitsgestützter Ortsbrust (sog. Suspensionsschilde) oder mit erdgeschützter Ortsbrust (sog. Erddruckschilde) arbeiten.

Bei derartigen Systemen werden für die Stützung der Ortsbrust z. B. Suspensionen aus Wasser und Bentonit oder Tonen verwendet, denen in der Regel Celluloseether, wie z. B. Carboxymethylcellulose sowie Sand oder Glimmer zugesetzt werden. Unter dem vor Ort herrschenden Stützdruck dringen solche Suspensionen in den Boden ein und versiegeln die Ortsbrust mit einem Filterkuchen. Der Boden wird sodann mit einem Abbaugerät mechanisch oder hydraulisch an der Ortsbrust gelöst, in einer Abbaukammer mit der Tonsuspension vermengt und anschließend über Rohrleitungen an die Geländeoberfläche gefördert. Der ausgehobene Boden wird entweder in einer speziellen Separieranlage von der Tonsuspension getrennt oder direkt in einer Deponie gelagert. Der Zusatz von Bentonit oder Ton zum abgebauten Boden hat neben schmierenden und abdichtenden Funktionen u. a. die Aufgabe, die Schließfähigkeit des Bodens zu erhöhen. Von Nachteil ist hierbei insbesondere, daß durch die Zugabe von Bentonit und Ton die Durchlässigkeit des abgebauten Bodens verringert wird, wodurch die durch den Abtransport erforderliche Entwässerung aufwendiger wird. Darüber hinaus ist die Tragfähigkeit des mit Bentonit und Ton vermischten Bodens z. T. so gering, daß aufgrund der schlechten mechanischen Festigkeit des zu deponierenden Bodens die Zuordnungskriterien zur Endlagerung nicht erfüllt werden, was wiederum zu aufwendigen Nachbehandlungen oder einer kostenintensiven Endlagerung des mit Bentonit oder Ton angereicherten Bodens in speziell hierfür bezeichneten Deponien (Sondermülldeponie) führt.

Von den verschiedenen Schildsystemen, wie z. B Hydroschild, Thixschild, Hydrojetschild und Mixschild, kann nur beim Mixschild von der sog. Flüssigkeitsstützung auf Erddruckstützung umgestellt werden. Hierbei wird der gelöste Boden selbst als Stützmedium eingesetzt, was insbesondere bei bindig - pastösen Böden vorteilhaft ist. Die nach diesem Prinzip arbeitenden sog. Erddruckschilde (Earth Pressure Balance-EPB-Schilde) wurden ursprünglich in Japan entwickelt, gewinnen aber aufgrund ihrer technischen und wirtschaftlichen Vorteile auch in anderen Ländern immer mehr an Bedeutung. Hierbei wird der Boden mit einem sich drehenden Schneidrad abgebaut und gelangt durch Öffnungen im Schneidrad in die Abbaukammer. Der abgebaute Boden wird z. B. mit Förderbändern oder Förderschnecken oder hydraulisch in Rohrleitungen an die Geländeoberfläche transportiert. Je nach anwendungstechnischen Notwendigkeiten kommen dabei unterschiedliche Varianten, wie z. B. erddruckbetriebene Schilde mit Schaumzugabe oder Erddruckschilde mit Suspensionsgegendruck zum Einsatz. In Japan hat sich die Zugabe von Polymerschäumen als wirksamste Methode erwiesen. Das Prinzip und die Vorteile eines solchen Verfahrens gegenüber herkömmlichen Schildsystemen werden z. B. in JP 900018886 und JP 880061354 erwähnt (siehe auch: Firmenbroschüre der Fa. Komatsu Ltd., (The Development of Chemical Plug Shield Tunnelling", Japan 1990; Firmenbroschüre der Fa. Obayashi Corp. "Development of Chemical Foam Injection Shield Tunnelling Method", Japan 1992; Y. Hanyuda, T. Fujiwara, Research Inst. Obayashi, S. 21 (1988)). Da das Verfahren selbst nicht Gegenstand der vorliegenden Erfindung ist, sollen an dieser Stelle die verfahrenstechnischen Besonderheiten dieses Schildsystems nicht näher erläutert werden.

Die Zusammensetzung schaumgenerierender Systeme wird z. B. in DE 4206831 A1 spezifiziert. Danach bestehen diese Systeme aus oberflächenaktiven Substanzen, wie z.B. bestimmten natürlichen Proteinen, Alkylethersulfaten, wie z.B. Natrium-Laurylethersulfat, wasserlöslichen Celluloseethern, wie z.B. Methyl-, Carboxymethyl- oder Ethylcelluloseethern, und wasserabsorbierenden Harzen und Phasentransferkatalysatoren, wie Dodecyltrimethylammoniumchlorid, Alkyl-Benzyl-Dimethylammoniumchloriden und Benzalkoniumchlorid.

Mit Hilfe spezieller Schaumgeneratoren werden Schäume mit hohem Tragevermögen für das erbohrte Gestein in der Abbaukammer erzeugt. Das Gemisch aus Boden und Schaum wird mit herkömmlichen Methoden an die Geländeoberfläche transportiert und mit komplexbildenden Salzen bzw. speziellen Enzymen (z.B. Proteasen, Lipasen (siehe JP 90 001 8886)) behandelt. Dadurch soll insbesondere der Abbau der eingesetzten schaumerzeugenden Komponenten beschleunigt und eine umweltverträgliche Endlagerung des Boden-Schaumgemisches sichergestellt werden.

Unabhängig von der Art der Nachbehandlung des Boden-Schaum-Gemisches werden generell mindestens zwei Komponenten, ein Schaumbildner (Tensid) und ein Verdickungsmittel bzw. ein Schaumstabilisator (Celluloseether) verwendet. In vielen Fällen (s. o.) wird jedoch der Einsatz von mehr als zwei Mitteln für erforderlich gehalten, um allen technischen Anforderungen gerecht zu werden.

Der Einsatz von mehreren schaumgenerierenden oder schaumstabilisierenden Systemen ist dabei grundsätzlich aus ökonomischen und verfahrenstechnischen Gründen von Nachteil. Zudem erfordert der Einsatz von Enzymen bzw. der Umgang mit natürlichen, enzymatisch leicht abbaubaren Produkten umfangreiche Sicherheitsvorkehrungen (z. B. pH-Wert- und Temperaturkontrolle), um z. B. Inhibierungen von Enzymaktivitäten oder Kontaminierungen von Lagertanks zu vermeiden. Eine gute biologische Abbaubarkeit ist darüber hinaus per se noch nicht mit einer guten Umweltverträglichkeit gleichzusetzen, da die Abbauprodukte eine höhere Ökotoxizität aufweisen können, als die Ausgangsverbindungen selbst (s. z.B. p-Alkylphenoloxethylate). Wasserlösliche Spaltprodukte von biologisch leicht abbaubaren Verbindungen führen zu einer Erhöhung des Anteils des im Grundwasser gelösten organisch gebundenen Kohlenstoffs (DOC- oder TOC-Wert) und damit zu einer Belastung der Umwelt. Eine unbedenkliche und kostengünstige Deponierung des ausgehobenen Bodens ist damit nicht gewährleistet, so daß aufwendige Nachbehandlungen (z.B. Ausspülen des Bodens auf den zulässigen Grenzwert) oder kostenintensive Zwischen- (sog. temporäre Lagerung) oder Endlagerungen in speziell hierfür vorgesehenen Deponien (sog. Sondermülldeponie) erforderlich sind.

Die WO-A 91 172 10 beschreibt Zusammensetzungen aus nicht-ionischen Celluloseethern wie Methylcellulose oder Hydroxypropylmethylcellulose und ionischen Celluloseethern wie Carboxymethylcellulose.

Die JP-A-20 498 93 offenbart Zusammensetzungen aus Carboxymethylcellulose, die weiterhin ein unveredles natürliches Polysaccharid und ein nicht-ionisches Hydrokolloid enthalten.

In der US-A-30 148 08 werden Zusammensetzungen aus nicht-ionischen und ionischen Celluloseethern beschrieben.

Die JP-A-30 59 240 bezieht sich auf Schaumsysteme auf Basis von oberflächenaktiven, schaumgenerierenden Komponenten und wasserabsorbierenden Polymeren.

In keiner dieser Dokumente werden Hilfsmittel für Bohrspülanwendungen offenbart.

Die JP-A 1 263 132 beschreibt Bohrspülhilfsmittel aus der Kombination eines wasserlöslichen Cellulosederivates hoher Viskosität mit einem wasserlöslichen Cellulosederivat niedriger Viskosität.

Ziel der Entwicklung muß es daher sein, Schaumsysteme bereitzustellen, die die positiven Eigenschaften der herkömmlichen Systeme besitzen, jedoch kostengünstig herstellbar und einsetzbar sind und in der Anwendung keinen hohen technischen Aufwand erforderlich machen. Ferner muß das Boden-Schaum-Gemisch im Vergleich zu Bentonitsuspensionen über eine ausreichende mechanische Festigkeit verfügen, um so den Zuordnungskriterien zur Endlagerung in einer Deponie zu entsprechen. Die zukünftig immer knapper werdenden Deponieflächen für Sondermüll machen es darüber hinaus erforderlich, daß das erbohrte Boden-Schaum-Gemisch ökotoxikologisch unbedenklich ist, damit das Gemisch problemlos - wie z. B. Hausmüll - deponiert werden kann

Überraschenderweise wurde nun gefunden, daß durch den Einsatz von Zubereitungen bestehend aus nicht-ionischen und ionischen Hydrokolloiden - insbesondere Celluloseethern - und oberflächenaktiven Substanzen (Tensiden) als Hilfsmittel für Bohrspülanwendungen beim Tunnelbau, insbesondere bei der Schildvortriebstechnik für Erddruckschilde, gegenüber dem Stand der Technik höhere Schaumergiebigkeiten, verbesserte Werte für das Tragevermögen des ausgehobenen Bodens sowie günstigere ökotoxikologische Werte erhalten werden.

Unter Hydrokolloid werden im Rahmen der vorliegenden Erfindung chemisch veränderte, veredelte Biopolymere, insbesondere Polysaccharidether, vorzugsweise Celluloseether verstanden, die wasserlöslich sind bzw. nach Aufhebung einer ggf. vorliegenden Vernetzung wasserlöslich werden.

Bevorzugte ionische Hydrokolloide sind technische (salzhaltige) oder gereinigte Polysaccharidether, wie z.B. Carboxyalkylcelluloseether, insbesondere Carboxymethylcellulose; Sulfoalkylcelluloseether, insbesondere Sulfoethylcellulose und Sulfomethylcellulose; Carboxyalkylhydroxyalkylcelluloseether, insbesondere Carboxymethylhydroxyethylcellulose und Carboxymethylhydroxypropylcellulose; Sulfoalkylhydroxyalkylcellulose, insbesondere Sulfoethylhydroxyethylcellulose und Sulfoethylhydroxypropylcellulose; Sulfoalkylalkylcelluloseether, insbesondere Sulfoethylmethylcellulose, Sulfopropylmethylcellulose; Carboxyalkylsulfoalkylcelluloseether, insbesondere Carboxymethylsulfoethylcelluloseether und Carboxymethyl-sulfopropylcelluloseether; Dialkylaminoalkylcelluloseether, wie z.B. Diethylaminoethylcelluloseether; Dialkylaminoalkylhydroxyalkylcelluloseether, wie z.B. Diethylaminoethylhydroxyethylcelluloseether; modifizierte Stärken, wie z.B. carboxyalkylierte Stärken (z. B. Carboxymethylstärke) und modifizierte Guarprodukte (z.B. Carboxymethylguar).

Bevorzugte nicht-ionische Hydrokolloide sind technische (salzhaltige) oder gereinigte Polysaccharidether, wie z. B. Alkylcelluloseether, insbesondere Methylcellulose, Ethylcellulose; Alkylhydroxyalkylcelluloseether, insbesondere Methylhydroxyethylcellulose, Methylhydroxypropylcellulose, Ethylhydroxyethylcellulose, Ethylhydroxypropylcellulose; Hydroxyalkylcelluloseether, insbesondere Hydroxy-ethylcellulose und Hydroxypropylcellulose; Alkenylcelluloseether, insbesondere Allylcelluloseether; Alkylenalkylcelluloseether, insbesondere Allylmethylcelluloseether und Allylethylcellulose; modifizierte Stärken, wie z. B. alkylierte und hydroxyalkylierte Stärkeether (z. B. Methyl-, Ethylstärke, Hydroxyethyl- und Hydroxypropylstärke) und modifizierte Guarprodukte (z.B. Hydroxypropylguar).

Im Rahmen der vorliegenden Erfindung weisen die nicht-ionischen Polysaccharidether, insbesondere Celluloseether, bevorzugt Alkyl- und Alkylhydroxyalkylcelluloseether, durchschnittliche Substitutionsgrade durch Alkyl-, insbesondere Methyl- oder Ethylsubstituenten von DS = 0,5 - 2,8, insbesondere DS = 0,8 - 2,5 auf. Bei Einsatz von Alkylhydroxyalkylcellulosemischethern (Methylhydroxyethylcellulose, Methylhydroxypropylcellulose, Ethylhydroxyethylcellulose, Ethylhydroxypropylcellulose) beträgt der durchschnittliche Substitutionsgrad (MS) durch Hydroxyalkyl-, insbesondere Hydroxyethyl- oder Hydroxypropylgruppen MS = 0,001 - 2,8, insbesondere MS = 0,01 - 1,8. Bei Einsatz von Hydroxyalkylcelluloseethern oder Hydroxyalkylcellulosemischethern (Hydroxyethylcellulose, Hydroxypropylcellulose, Hydroxyethylhydroxypropylcellulose) beträgt der durchschnittliche Substitutionsgrad durch Hydroxyalkylgruppen, insbesondere Hydroxyethyl- oder Hydroxypropylgruppen, MS = 0,01 - 4,5, insbesondere 0,1 - 4,0.

Der bevorzugte durchschnittliche Substitutionsgrad des ionischen Polysaccharidethers, insbesondere Celluloseeethers, bevorzugt Carboxyalkyl-, vorzugsweise Carboxymethylsubstituenten, liegt bei DS = 0,1 - 2,0, insbesondere DS = 0,4 - 1,5.

Der Anteil des nicht-ionischen bzw. ionischen Hydrokolloids - insbesondere wasserlöslichen Celluloseethers- bezogen auf die Summe aus nicht-ionischem und ionischem Hydrokolloid kann je nach anwendungstechnischen Notwendigkeiten und Erfordernissen variieren. Die Menge des nicht-ionischen Celluloseethers beträgt hierbei 0,1 - 99,9 Gew.-%, insbesondere 1 - 99 Gew.-%, vorzugsweise 10 - 90 Gew.-%. Die Menge des ionischen Celluloseethers kann somit 99,9 - 0,1 Gew.-%, insbesondere 99 - 1 Gew.-%, vorzugsweise 90 - 10 Gew.-% betragen.

Im Rahmen der vorliegenden Erfindung werden unter oberflächenaktiven, schaumgenerierenden Komponenten (Tensiden) Aniontenside (z. B. Alkylbenzolsulfonate, Alkansulfonate, Fettalkoholsulfate oder Fettalkoholethersulfate), Kationtenside (z. B. Alkylammoniumverbindungen, Imidazolinium-Verbindungen), nicht-ionische Tenside (z. B. Fettalkoholethoxylate, Alkylenolethoxylate, Fettaminoethoxylate, Zuckertenside, Fettsäureethoxylate, Fettsäureesterethoxylate, Alkylpolyglucoside) sowie Amphotenside verstanden.

Die Summe aus ionischem und nicht-ionischem Hydrokolloid bezogen auf den gesamten Anteil aus Hydrokolloid und Tensid, beträgt bis zu 99,9%, insbesondere bis zu 98%, bevorzugt bis zu 60%.

Ggf. enthält die erfindungsgemäß als Hilfsmittel für Bohrspülanwendungen beanspruchte Zubereitung aus Hydrokolloid - insbesondere Polysaccharidether, bevorzugt Celluloseether - und Tensid, unveredelte Polysaccharide. Ihr Einsatz gestattet es, die Zubereitung reversibel zu vernetzen, so daß ein klumpenfreies Dispergieren der erfindungsgemäß beanspruchten Mischung möglich ist. Ferner können durch den Einsatz von natürlich vorkommenden, nativen, unveredelten Polysacchariden preisgünstige Abmischungen bereitgestellt werden, die darüber hinaus den Vorteil besitzen, daß sie toxikologisch unbedenklich einsetzbar sind und - sofern sie wasserunlöslich sind - aus dem zu deponierenden Boden-Schaum-Gemisch nicht ausgewaschen werden und damit zu keiner Belastung des Grundwassers führen.

Im Rahmen der vorliegenden Erfindung werden unter Polysaccharid natürliche, native, unveredelte Biopolymere, wie z. B. Xanthan, Stärken, Guar, natürliche Gummi, Johannisbrotkernmehl, Traganth, Tamarinde, Alginate, Proteine, insbesondere aber Cellulosechemiezellstoffe, wie z. B. Linters-, Nadelholz-Sulfit-, Nadelholz-Sulfat- und Laubholzzellstoffe oder Gemische hieraus verstanden.

Der Anteil des natürlichen, nativen, unbehandelten Polysaccharides, insbesondere Cellulosezellstoffes, bezogen auf die Summe aus ionischem und nicht-ionischem Hydrokolloid - insbesondere Celluloseeether - und Tensid kann bis zu 60%, insbesondere bis zu 50% betragen.

Die Herstellung der erfindungsgemäß als Hilfsmittel für Bohrspülanwendungen beanspruchten Zubereitung kann nach den bekannten, in der Literatur beschriebenen Methoden erfolgen. Dabei kann es erforderlich sein, ein Quellmittel einzusetzen, um eine intensive Vermischung bzw. Vernetzung der in der Zubereitung vorliegenden Hydrokolloide und Polysaccharide zu gewährleisten. Als Quellmittel werden dabei vorzugsweise toxikologisch unbedenkliche Systeme, wie Wasser oder wäßrigalkoholische Gemische eingesetzt. Das Verfahren zur Herstellung der erfindungsgemäß beanspruchten Zubereitung kann nach den üblichen, literaturbekannten Methoden durchgeführt werde (s. z. B. EP 0 407 838 A1, EP 0 686 666 A1, US 4,373,959, DE 31 03 338 A1 und dort zitierte Literatur).

Der Einsatz der vorgenannten Abmischungen macht eine homogene und intensive Durchmischung aller Komponenten erforderlich. Das Verfahren der physikalischen Durchmischung bzw. die Art des verwendeten Mischaggregates ist Stand der Technik und für das Wesen der vorliegenden Erfindung unerheblich und somit auch nicht Gegenstand der Erfindung. Geeignete Mischaggregate sind z. B. geschlossene Mischbehälter oder Mischer mit rotierenden Mischwerkzeugen. Zur Vermeidung von Agglomeraten oder Entmischungen ist es ferner möglich, den Mischvorgang mit einem Mahlvorgang zu verbinden, Vormischungen herzustellen oder die Homogenisierung durch die Benetzbarkeit mit Zusatzstoffen zu verbessern. Geeignete Apparaturen hierfür sind z. B. Kneter, Feuchtgutmischer, Granuliertrommeln, Pelletierteller oder -trommeln.

Die erfindungsgemäß als Hilfsmittel für Bohrspülanwendungen beanspruchten oben bezeichneten Zubereitungen können zusätzlich nach dem Stand der Technik übliche Hilfsstoffe, insbesondere Füllstoffe, Konservierungsmittel, Luftporenbildner, Phasentransferkatalysatoren, Emulgatoren, dispergierende oder absorbierende Polymere (z. B. Harze) u. ä. oder Gemische hieraus enthalten. Derartige Hilfsstoffe werden vorzugsweise in Mengen von maximal 35 %, insbesondere bis zu 25 % eingesetzt, ohne dabei das Wesen der vorgenannten erfindungsgemäß als Hilfsmittel für Bohrspülanwendungen beanspruchten Zubereitung zu verändern.

Die Erfindung wird im Folgenden anhand von bevorzugten Ausführungsbeispielen im Vergleich zum Stand der Technik (Celluloseether allein bzw. Abmischungen von Celluloseethern mit schaumgenerierenden Systemen (Tensiden)) näher erläutert.

Die zum Einsatz gelangten Celluloseether bzw. physikalischen Mischungen von Celluloseethern werden durch die in Tabelle 1 bezeichneten Kenndaten charakterisiert.

**Tabelle 1:**

| Charakteristische Kenndaten von im Rahmen der Erfindung ausgetesteten Celluloseethern und Celluloseetherabmischungen | | | | | | | |
|---|---|---|---|---|---|---|---|
| Prod.-Nr. | Celluloseether | Substitutionsgrad | | | Trockengehalt [%] | Viskosität [mPa.s]⁴⁾ | Bemerkung |
| | | DS-Me¹⁾ | DS-SE; DS-CM²⁾ | MS-HE MS-HP³⁾ | | | |
| 1 | CMC⁵⁾ | - | 0,88 | - | 90,6 | 200 | Stand der Technik |
| 2 | MHEC⁶⁾ | 1,60 | - | 0,28 | 96,7 | 600 | Stand der Technik |
| 3 | MHPC : CMC (15 : 85)⁷⁾ | 1,60 | 0,88 | 0,17 | 93,8 | 407 | Erfindung |
| 4 | MHEC : CMC (50 : 50)⁸⁾ | 1,60 | 0,88 | 0,28 | 92,3 | 970 | Erfindung |
| 5 | MHPC : CMC (85 : 15)⁹⁾ | 1,60 | 0,88 | 0,17 | 95,6 | 397 | Erfindung |

| | | | | | | | |
|---|---|---|---|---|---|---|---|
| ¹⁾ Durchschnittlicher Substitutionsgrad durch Methylgruppen (Me) | | | | | | | |
| ²⁾ Durchschnittlicher Substitutionsgrad durch Carboxymethyl- (CM) bzw. Sulfoethylgruppen (SE) | | | | | | | |
| ³⁾ Molarer Substitutionsgrad durch Hydroxyethyl-(HE) oder Hydroxypropylgruppen (HP) | | | | | | | |
| ⁴⁾ Viskosität gemessen als 0,5gew.-%ige, wäßrige Lösung in einem Rotationsviskosimeter (Haake) bei D = 2,5 s⁻¹, T = 20°C | | | | | | | |
| ⁵⁾ Carboxymethycellulose; Walocel CRT 10000 PA® (Wolff Walsrode AG) | | | | | | | |
| ⁶⁾ Methylhydroxyethylcelluloseether; Walocel MKX 30000 PP 01® (Wolff Walsrode AG) | | | | | | | |
| ⁷⁾ Physikalische Mischung aus 15 Gew.-% Methylhydroxypropylcellulose (Walocel MKS 20000 PP 11® (Wolff Walsrode AG)) und 85 Gew.% Carboxymethylcellulose (Walocel CRT 10000 PA® (Wolff Walsrode AG)) | | | | | | | |
| ⁸⁾ Physikalische Mischung aus 50 Gew.-% Methylhydroxyethylcellulose (Walocel MKX 30000 PP 01® (Wolff Walsrode AG)) und 50 Gew.-% Carboxymethylcellulose (Walocel CRT 30000 PA® (Wolff Walsrode AG)) | | | | | | | |
| ⁹⁾ Physikalische Mischung aus 85 Gew.-% Methylhydroxypropylcellulose (Walocel MKS 20000 PP 11® (Wolff Walsrode))und 15 Gew.-% Carboxymethylcellulose (Walocel CRT 10000 PA® (Wolff Walsrode AG)) | | | | | | | |

Der Vorteil des Einsatzes der erfindungsgemäß beanspruchten Zubereitungen als Hilfsmittel für Bohrspülanwendungen wird anhand der weiter unten beschriebenen Meßmethoden exemplarisch beschrieben. Die Herstellung der einzelnen, in der erfmdungsgemäß als Hilfsmittel für Bohrspülanwendungen beanspruchten Abmischung vorliegenden Celluloseether ist Stand der Technik und nicht Gegenstand der vorliegenden Erfindung. Die Verwendung von nicht-ionischen und ionischen Hydrokolloiden, insbesondere Celluloseethern, zusammen mit oberflächenaktiven Komponenten (Tensiden) als Hilfsmittel für den Tunnelbau, insbesondere für mit Erddruck betriebene Schildsysteme, zeigt gegenüber dem Stand der Technik (Methylcelluloseether, Carboxymethylcelluloseether, Ethylcelluloseether) gute Ergiebigkeiten bei verbesserten Werten für das Tragevermögen des erbohrten Materials. Der mit den erfindungsgemäß als Hilfsmittel für Bohrspülanwendungen beanspruchten Produkten vermischte Boden ist darüber hinaus ökologisch unbedenklich deponierbar.

Der Einsatz der erfindungsgemäß als Hilfsmittel für Bohrspülanwendungen beanspruchten Zubereitungen wird mittels der nachfolgend beschriebenen Labormethoden exemplarisch im Vergleich zum Stand der Technik beschrieben. Die erforderlichen Eigenschaften und Wirkungen der Zubereitung sind von den jeweils sich ändernden geologischen Bedingungen (Bodenart, Körnung etc.) abhängig und werden durch die sehr unterschiedlichen Anforderungen, die an das Boden-Zusatzmittelgemisch gestellt werden (z. B. Abdichtung gegen drückendes Wasser, Verringerung des Scherwiderstandes für Schneid- und Mischrad, Herstellen eines homogenen Gemisches von guter Konsistenz, Eignung für den Bandtransport, Deponiefähigkeit u. a.) bestimmt, so daß die in den Beispielen erwähnten Mengenangaben von den tatsächlichen, in der Praxis zum Einsatz kommenden Mengen abweichen können.

Folgende Untersuchungen wurden vorgenommen:
1. Untersuchung des Aufschäumfaktors
2. Ermittlung der Konsistenz der Boden-Schaum-Gemisches mittels Setzmaß-Bestimmung (Slump-Test nach DIN ISO 4109)
3. Schaumstabilität und Bestimmung der Fließgrenze mittels Kugelharfe (DIN ISO 4126)
4. Bestimmung der Dichte beim Slump-Test sowie des Trockengehaltes des Boden-Schaum-Gemisches.

Zur Darstellung der Schaumqualität wurde, wie unten angegeben, neben der visuellen Beurteilung, der Schaumfaktor ermittelt, der das Verhältnis des Volumens des Schaums zum Volumen der flüssigen Lösung darstellt. Für die Bestimmung des Schaumfaktors wurden 1,5gew.-%ige Celluloseetherlösungen unter Berücksichtung ihres Trockengehaltes bereitgestellt. Die Versuche wurden z. T. unter Zugabe eines handelsüblichen Tensids (7,14 g Tensid auf 350 g einer 1,5%igen, wäßrigen Lösung des Celluloseethers bzw. der Celluloseethermischung) vom Typ OMC 181® ( Henkel KGaA, Düsseldorf) durchgeführt. Generell wurde dabei so vorgegangen, daß 357 g bzw. 350 g der 1,5%igen Lösung des Celluloseethers - mit oder ohne Tensid - in einem Gefäß mit einem Fassungsvermögen von 3,5 L (Durchmesser 20 cm, Tiefe 13 cm) mit einem Mixer (Typ MUM 44, Fa. Bosch) unter definierten Bedingungen während 3

Min. aufgeschäumt wurden (Rührgeschwindigkeitsstufe 4). Die Bestimmung des Schaumfaktors erfolgte durch Messung des Schaumvolumens und Berechnung des Quotienten aus Schaumvolumen und Volumen der Flüssigkeit. Hohe Werte bezeichnen dabei hohe Ergiebigkeiten.

Zur Ermittlung der Schaumstabilität bzw. des Schaumtragevermögens für das erbohrte Bodenmaterial wurde die Prüfvorschrift für Ortbeton-Schlitzwände (DIN 4126) herangezogen.

Zur Bestimmung der Fließgrenze des nach dem o. g. Verfahren hergestellten Schaumes wurde ein Kugelharfengerät verwendet. Die Fließgrenze kennzeichnet dabei die Anfangsschubspannung, die überwunden werden muß, um das Boden-Schaum-Gemisch in Bewegung zu versetzen. Das Meßprinzip beruht darauf, daß mehrere Glas- und Stahlkugeln von unterschiedlichem Durchmesser und Gewicht gleichzeitig in die stützende Flüssigkeit bzw. den Schaum eingetaucht werden. Bei gegebener Dichte der Flüssigkeit bzw. des Schaums ist jeder Kugel eine andere kritische Fließgrenze zugeordnet (siehe Tabelle 2), bei der sie in der Flüssigkeit bzw. im Schaum in Schwebe bleibt. Kugeln, deren kritische Fließgrenzen kleiner sind als die Fließgrenze der Flüssigkeit bzw. des Schaums, schwimmen auf der stützenden Flüssigkeit bzw. auf dem stützenden Schaum, jene, deren kritische Fließgrenze größer ist, tauchen unter. Die Kugeln sind in der Reihenfolge ihrer wachsenden kritischen Fließgrenzen mit laufenden Nummern (Nr. 1 - 10) gekennzeichnet. Die Fließgrenze der stützenden Flüssigkeit/Schaum liegt also zwischen der kritischen Fließgrenze der Kugel mit der größten Nummer, die noch schwimmt, und der kritischen Fließgrenze der Kugel mit der kleinsten Nummer, die in die stützende Flüssigkeit eingetaucht ist.

Zur Messung wird die Scheibe, an der die Kugeln mittels Perlonfäden hängen, in eine Vorrichtung gehängt, die gestattet, sie langsam in lotrechter Richtung zu bewegen. Damit wird sichergestellt, daß die Kugeln behutsam auf die Oberfläche des Schaums aufgesetzt bzw. unter diese getaucht werden. Die Dauer zwischen Schaumherstellung und Auflegen der Kugelharfe auf die Schaumoberfläche betrug bei den hier durchgeführten Versuchen konstant 70 sec. Die an der Scheibe hängenden Kugeln tauchen in den Schaum ein bzw. bleiben auf diesem schwimmen. Die Fäden der in den Schaum eingetauchten Kugeln sind straff gespannt, die Fäden jener Kugeln, die nicht untergetaucht sind, sind gebogen. Auf der Scheibe sind die einzelnen Kugeln durch laufende Nummern gekennzeichnet. Die größte Nummer der eingetauchten Kugeln (gespannter Faden) wird notiert. Die Ablesung wurde 20 sec nach Auflegen der Kugelharfe auf die Schaumoberfläche vorgenommen. Für die Untersuchung des Gemisches aus Schaum und dem auszutragenden Erdmaterial wurde ein Musterboden mit einer bestimmten Körnung und definierten Anteilen von Fein-, Mittel- und Grobfraktionen verwendet. Die Körnungskurve des Bodens ist Bild 1 zu entnehmen.

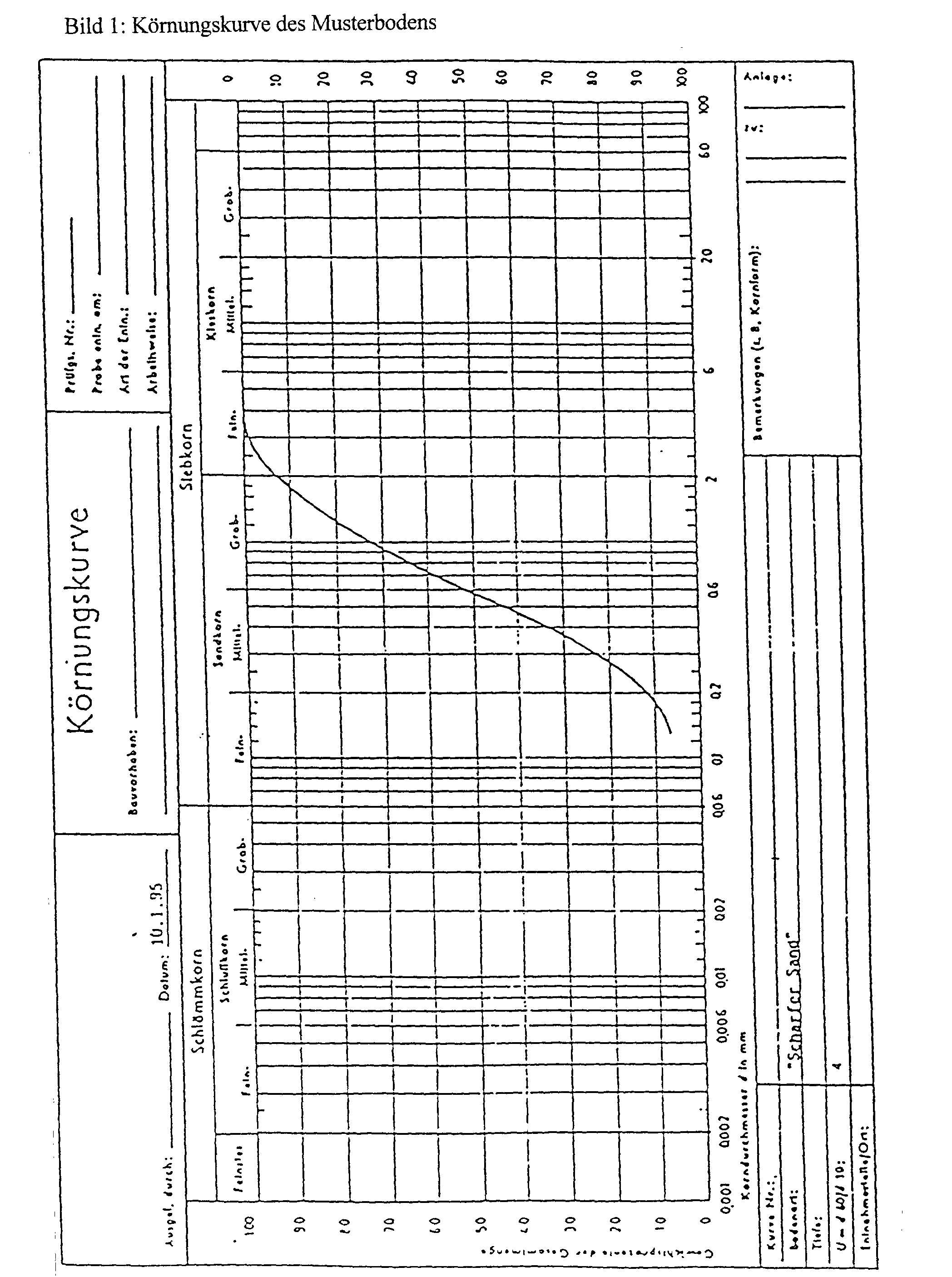

**Tabelle 2:**

| Bestimmung der Fließgrenzen t_{F} in N/m2 mittels Kugelharfe | | | | | | | | | | |
|---|---|---|---|---|---|---|---|---|---|---|
| Nr. | Werkstoff-Kugel | Kugel Durchmesser | Gewicht [g] | für Dichte in g/cm³ | | | | | | |
| | | | | 1,02 | 1,07 | 1,12 | 1,17 | 1,22 | 1,27 | 1,32 |
| 1 | Glas | 2,9 | 0,033 | 6,9 | 6,7 | 6,5 | 6,2 | 6,0 | 5,8 | 5,7 |
| 2 | Glas | 4,2 | 0,105 | 10,0 | 9,7 | 9,4 | 9,0 | 8,7 | 8,4 | 8,1 |
| 3 | Glas | 5,8 | 0,26 | 13,8 | 13,4 | 12,9 | 12,5 | 12,1 | 11,6 | 11,2 |
| 4 | Glas | 7,6 | 0,60 | 18,1 | 17,5 | 16,9 | 16,4 | 15,8 | 15,2 | 14,7 |
| 5 | Glas | 10,6 | 1,59 | 25,2 | 24,4 | 23,6 | 22,8 | 22,0 | 21,3 | 20,5 |
| 6 | Glas | 15,1 | 4,70 | 35,9 | 34,8 | 33,6 | 32,5 | 31,4 | 30,3 | 29,2 |
| 7 | Stahl | 4,0 | 0,26 | 39,8 | 39,5 | 39,2 | 38,9 | 38,6 | 38,3 | 38,0 |
| 8 | Stahl | 5,0 | 0,51 | 49,8 | 49,5 | 49,1 | 48,7 | 48,4 | 48,0 | 47,6 |
| 9 | Stahl | 6,0 | 0,87 | 59,7 | 59,3 | 58,8 | 58,4 | 57,9 | 57,5 | 57,0 |
| 10 | Stahl | 7,0 | 1,39 | 70,0 | 69,3 | 68,9 | 68,4 | 67,9 | 67,4 | 66,9 |

Zur Konsistenzbestimmung des Boden-Zusatzmittel-Gemisches im Arbeitsraum und am Förderschneckenende wurden Slump-Werte nach DIN ISO 4109 für Frischbeton ermittelt. Für die Untersuchungen wurde der Musterboden mit einer konstanten Schaummenge vermischt und das Setzmaß mittels Slump-Test gemessen. Der wassergesättigte Boden (Volumen: 6,676 mL, Dichte: 2,1 kg/L) wurde mit z. T. unterschiedlichen Mengen Schaum während 2 Min. vermischt und anschließend gewogen. Das Gemisch aus Boden und Schaum wurde anschließend in einen Kegelstumpf definierter Abmessungen eingefüllt. Das Setzmaß wurde nach Entfernen des Kegelstumpfes im Vergleich zu herkömmlichen handelsüblichen Celluloseethern bestimmt. Im einzelnen wurde dabei so vorgegangen, daß das Boden-Schaum-Gemisch innerhalb von 2 Min. in einen Hohlkegelstumpf definierter Abmessungen eingegeben wurde. Die Form wurde auf eine feste, ebene, feuchte und wasserabweisende Oberfläche gestellt. Nach Ziehen des Kegelstumpfes wurde das Setzmaß direkt entsprechend DIN ISO 4109 bestimmt, indem die Differenz zwischen der Höhe der Form und dem höchsten Punkt des Prüfkörpers auf 5 mm bestimmt wurde. Beträgt das Setzmaß (Ausbreitmaß) weniger als 100 mm, ist das Boden-Schaum-Gemisch zu steif, um verarbeitet zu werden. Andererseits sind Werte von über 300 mm ebenso unerwünscht, da der Boden aufgrund seiner stark verflüssigenden Wirkung seine stabilisierenden und abdichtenden Funktionen verliert (Gefahr des sog. "Tagbruchs"). Ferner kann der Boden nicht mehr problemlos mittels Förderbändern ausgetragen werden und muß mittels geeigneter Trocknungsverfahren nachbehandelt werden. Für das im Rahmen des hier bezeichneten Anwendungsgebietes werden daher Setzmaße von 190 ± 30mm angestrebt, um ein verarbeitbares Gemisch zu erhalten, das anwendungstechnisch problemlos einsetzbar ist und ohne weitere Nachbehandlungen (Trocknung, Separierung oder enzymatische Behandlung u. ä.) gefördert, abtransportiert und deponiert werden kann.

Die Dichte des Boden-Schaum-Gemisches wurde ca. 5 Minuten nach Herstellung des Gemisches mittels Volumenbestimmung und Wägung des Materials ermittelt, das nach der Befüllung des Kegelstumpfes übrig geblieben war.Um die Wirksamkeit der Muster beurteilen zu können, wurde die Schaumzugabe mit 10 Volumen-% im ersten Schritt knapp ausgelegt. In einem weiteren Schritt wurden die Zugabemengen bei verschiedenen Mustern soweit gesteigert, bis eine brauchbare, mit den übrigen Konsistenzwerten (Slump-Test) vergleichbare Mischung gefunden wurde. Die tatsächlich erforderliche Menge an zuzusetzendem Schaum ist dabei von der jeweiligen Bodenart, dem Grundwasserdruck, der Bauart des Schildes u. v. a. m. abhängig und kann dabei in der Praxis von den hier verwendeten Einsatzmengen deutlich abweichen.

In der nachfolgend aufgeführten Tabelle (Tabelle Nr. 3) sind die Ergebnisse der anwendungstechnischen Untersuchungen aufgeführt. Unbehandelter Boden wurde dabei mit einem Tensid allein und als Gemisch mit handelsüblichen Celluloseethern im Vergleich zu den erfindungsgemäß beanspruchten Zubereitungen von nicht-ionischen (Methylhydroxyethyl- bzw. Methylhydroxypropylcelluloseether) und ionischen (Carboxymethylcelluloseether) Celluloseethern ausgetestet.

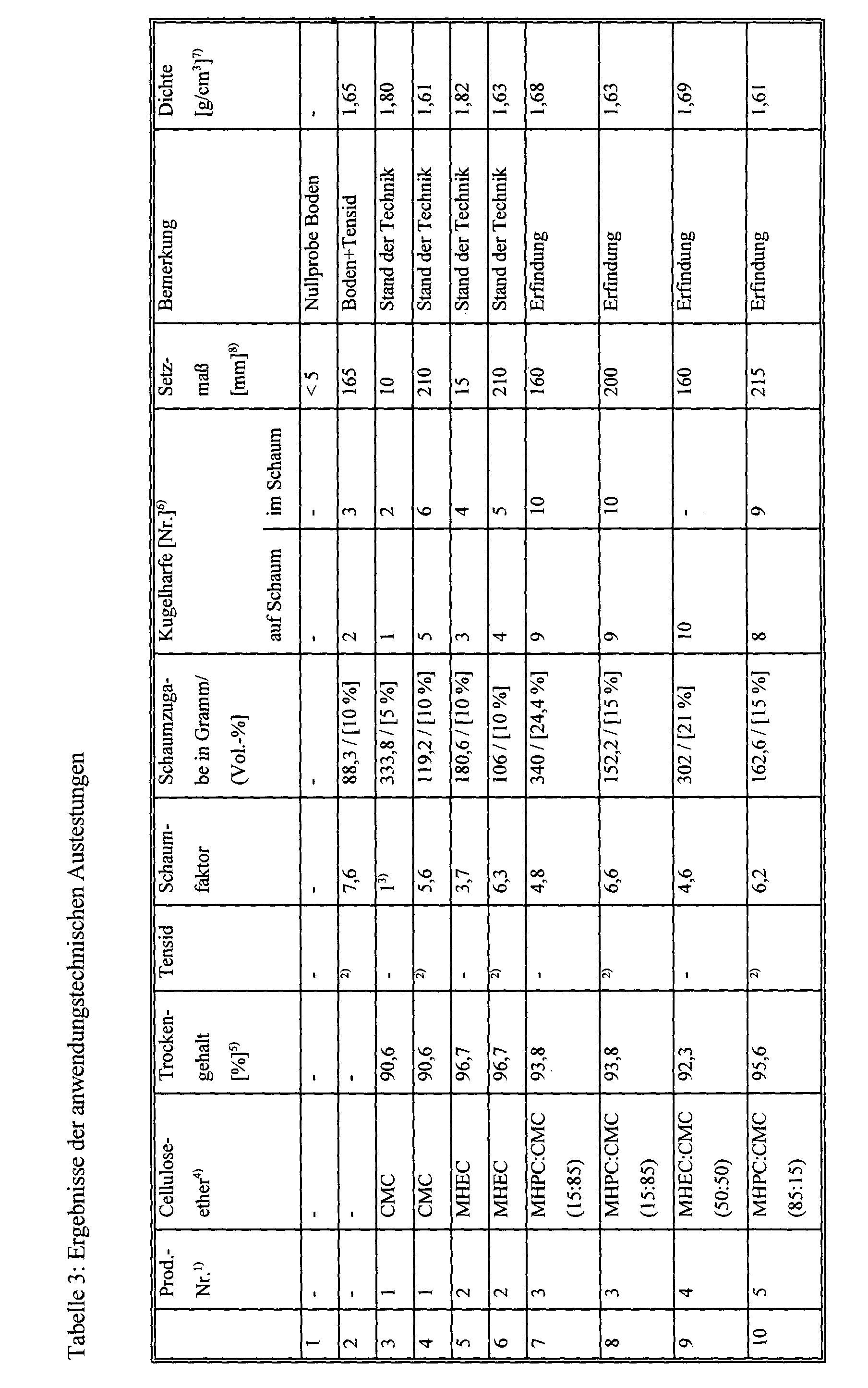

¹⁾ Produktkenndaten siehe Tabelle 1
²⁾ Tensid OMC 181® (Fa. Henkel KGaA); Zugabe von 2 Gew.-% Tensid (7,14 g Tensid auf 350 g einer 1,5gew.-%igen, wäßrigen Celluloseetherlösung)
³⁾ Celluloseether schäumt nicht; zugegebene Menge von 333,8 g entspricht 5 Vol.-%
⁴⁾ 1 ,5gew.-%ige, wäßrige Lösung; Kenndaten siehe Tabelle 1
⁵⁾ Trockengehalt des Celluloseethers
⁶⁾ Untersuchung des Schaums mittels Kugelharfe; hohe Numerierungen entsprechen hohen Gewichten (= hohes Tragevermögen des Schaums): DIN ISO 4126 für Ortbeton-Schlitzwände
⁷⁾ Dichte des Boden-Schaum-Gemisches
⁸⁾ Setzmaß nach DIN 4109 für Frischbeton; Soll-Bereich: 190 ± 30 [mm]

Ziel bei den anwendungstechnischen Untersuchungen war es, kostengünstige und einfach herstellbare Produkte bereitzustellen, die durch hohe Ergiebigkeiten (Schaumfaktoren), ausreichend hohe Setzmaße von 190 ± 30 mm bei gleichzeitig optimalem Tragevermögen für das erbohrte Erdmaterial, gekennzeichnet durch Slump-Werte von > 6 ("Kugelharfe", s. Stand der Technik (s. Tabelle 3)) sowie niedrige TOC-Werte für den behandelten Bodenaushub gekennzeichnet sind.

Das Ergebnis der Untersuchungen zeigt, daß nach dem Stand der Technik mit Methylhydroxyethylcelluloseethern ohne Tensidzusätze Schäume mit guter Verdickungsleistung und somit befriedigenden Werten für das Tragevermögen für erbohrtes Erdmaterial erhalten werden können (Tabelle 3, laufende Nr. 5, Produktnr. 2). Nachteilig hierbei ist jedoch der niedrige Wert für das Setzmaß von ca. 15 mm. Eine wesentliche Änderung der Bodenkonsistenz konnte daher durch Zusatz der MHEC allein nicht erreicht werden. Das Material ist in dieser Form nicht für den Einsatz in einem Erddruckschild geeignet, da das Boden-Schaum-Gemisch für eine Verarbeitung bei der Schildvortriebstechnik zu steif ist. Bei Einsatz eines derartigen Materials kann es in der Praxis zum Einbruch von Grundwasser kommen, da dann das Schild dem Wasserdruck nicht mehr standhalten kann. Erst durch Zugabe von Tensid zeigt das Boden-Schaumgemisch eine verbesserte Stabilität und ist erst dann für den Einsatz in Erddruckschilden mit schaumgenerierenden Systemen verwendbar (Tabelle 3, 1fd. Nr. 6). Dabei ist jedoch die stark konsistenzändernde, schon bei kleineren Schaumzugabemengen verflüssigende Wirkung - insbesondere bei stärkeren Erd- und Grundwasserdrücken - von Nachteil, da eine abdichtende Wirkung gegen drückendes Wasser nur mit einer höheren Schaumzugabe erzielt werden kann, dann aber die Druckhaltung in der Förderschnecke nicht mehr zu realisieren ist.

Eine handelsübliche Carboxymethylcellulose verhält sich ähnlich. Die schäumende Wirkung dieses ionischen Celluloseethers ist praktisch vernachlässigbar, so daß auch hier nur der kombinierte Einsatz von Verdickungsmittel und Tensid ausreichend stabile Schäume mit entsprechend gutem Tragevermögen für erbohrtes Gestein garantiert (siehe Tabelle 3, 1fd. Nr. 3 und 4, Produkt Nr. 1).

Wird hingegen auf den Zusatz des Verdickungsmittels (Celluloseether) vollkommen verzichtet und nur das Tensid allein eingesetzt, können zwar hohe Schaumergiebigkeiten und gute Werte für das Setzmaß eingestellt werden. Derartige Schäume verfügen jedoch über kein Tragevermögen für erbohrtes Material und sind daher ebenfalls allein nicht einsetzbar (Tabelle 3, 1fd. Nr. 2).

Zubereitungen von nicht-ionischen Hydrokolloiden, insbesondere Polysaccharidethern vorzugsweise Methylhydroxyethyl-, oder Methylhydroxypropylcelluloseethern, mit ionischen Hydrokolloiden, insbesondere Polysaccharidethern, vorzugsweise Carboxymethylcelluloseethern, führen zu einer wesentlichen Verbesserung des Standes der Technik. Mit Gemischen aus Methylhydroxyethylcellulose und Carboxymethylcellulose bzw. Methylhydroxypropylcellulose und Carboxymethylcellulose wird bezüglich der anwendungstechnischen Austestungen der Stand der Technik bereits ohne Tensidzusatz eingestellt oder übertroffen (Tabelle 3, 1fd. Nr.7 - 10, Produkt Nr. 3 - 5).

Der Einsatz der erfindungsgemäß als Hilfsmittel für Bohrspülanwendungen beanspruchten Zubereitungen aus nicht-ionischen und ionischen Celluloseethern allein (siehe Tabelle 3, 1fd. Nr. 7, 9) oder zusammen mit Tensiden (siehe Tabelle 3, 1fd. Nr. 8, 10) führt gleichermaßen zu einer deutlichen Verbesserung des Tragevermögens (siehe Werte für "Kugelharfe" in Tabelle 3) für das erbohrte Gestein. Damit ist es in der Praxis möglich, den Durchsatz an auszutragendem Boden zu erhöhen und einen schnellen, sicheren und kostengünstigen Austrag des Bodenaushubs zu gewährleisten. Dabei werden z. T. extrem tragfähige Schäume erhalten (siehe Tabelle 3, 1fd. Nr. 9), die mit Hilfe der hier verwendeten Untersuchungsmethode oberhalb der Meßgrenze zur Ermittlung der Fließgrenze liegen und somit nicht mehr eindeutig in ihrem Tragevermögen charakterisiert werden können. Derartig kompakte und dichte Schäume mit rasierschaumartiger Konsistenz verfügen über ein hervorragendes Tragevermögen für den ausgehobenen Boden. Ihr Einsatz führt auch ohne den Zusatz von oberflächenaktiven Verbindungen (Tensiden) zu einer deutlichen Verbesserung des Standes der Technik.

Der erfindungsgemäße Zusatz von oberflächenaktiven Verbindungen (Tensiden) führt u. a. zu einer Erhöhung der Schaumentwicklung und somit der Schaumergiebigkeit (siehe Schaumfaktoren in Tabelle 3, lfd. Nr. 8, 10). Dadurch ist es möglich, die für die Einstellung der anwendungstechnischen Größen ("Kugelharfe", "Setzmaß") benötigten Menge an Schaum zum Boden zu reduzieren (Vergleiche lfd. Nr. 7 mit 8). Der Stand der Technik wird bei Zusatz des Tensids zu Abmischungen aus nicht-ionischen und ionischen Celluloseethern weiter verbessert.

Bei der ökologischen Analyse des behandelten Bodeneluates zeigt sich, daß für die erfindungsgemäß beanspruchten Zubereitungen aus nicht-ionischen Hydrokolloiden, insbesondere Polysaccharidethern, vorzugsweise Celluloseethern, ionischen Hydrokolloiden, insbesondere Polysaccharidethern, vorzugsweise Celluloseethern, und Tensid, niedrige Werte für den im Filtrat des Bodens gelösten organisch gebundenen Kohlenstoff (in Tabelle 4 dargestellt als "DOC-Wert") auch dann erhalten werden, wenn anwendungstechnische oder geophysikalische Notwendigkeiten (z. B. bei Einstellung ausreichender abdichtender und schmierender Funktionen am Schneidrad) es erforderlich machen, dem Boden größere Mengen an Schaum (in Tabelle 4 dargestellt als "Vol-% Schaum") hinzuzusetzen. Dabei kommt es überraschenderweise noch nicht zu einer verflüssigenden Wirkung des ausgehobenen Bodens (siehe Tabelle 4 "Setzmaß"), so daß das Material problemlos gefördert und ausgetragen werden kann..

Mit Hilfe der erfindungsgemäß als Hilfsmittel für Bohrspülanwendungen beanspruchten Zubereitungen aus nicht-ionischem Hydrokolloid, insbesondere Polysaccharidether, vorzugsweise Celluloseether, und ionischem Hydrokolloid, insbesondere Polysaccharidether, vorzugsweise Celluloseether, allein oder zusammen mit Tensiden und ggf. nativen, unveredelten Biopolymeren, insbesondere Polysacchariden, vorzugsweise Cellulosechemiezellstoffen, ist es somit möglich, einfach herstellbare und kostengünstige Produkte bereitzustellen, deren Verwendung im Tunnelbau, insbesondere beim Tunnelbau mit Schildvortriebssystemen mit Schaum, zu einer Verbesserung des Standes der Technik (Schaumergiebigkeit, Setzmaß, Schaumtragevermögen) führt. Zudem wird durch die günstige ökotoxikologische Bewertung des Abraums eine ökologisch unbedenkliche und kostengünstige Deponierung sichergestellt.

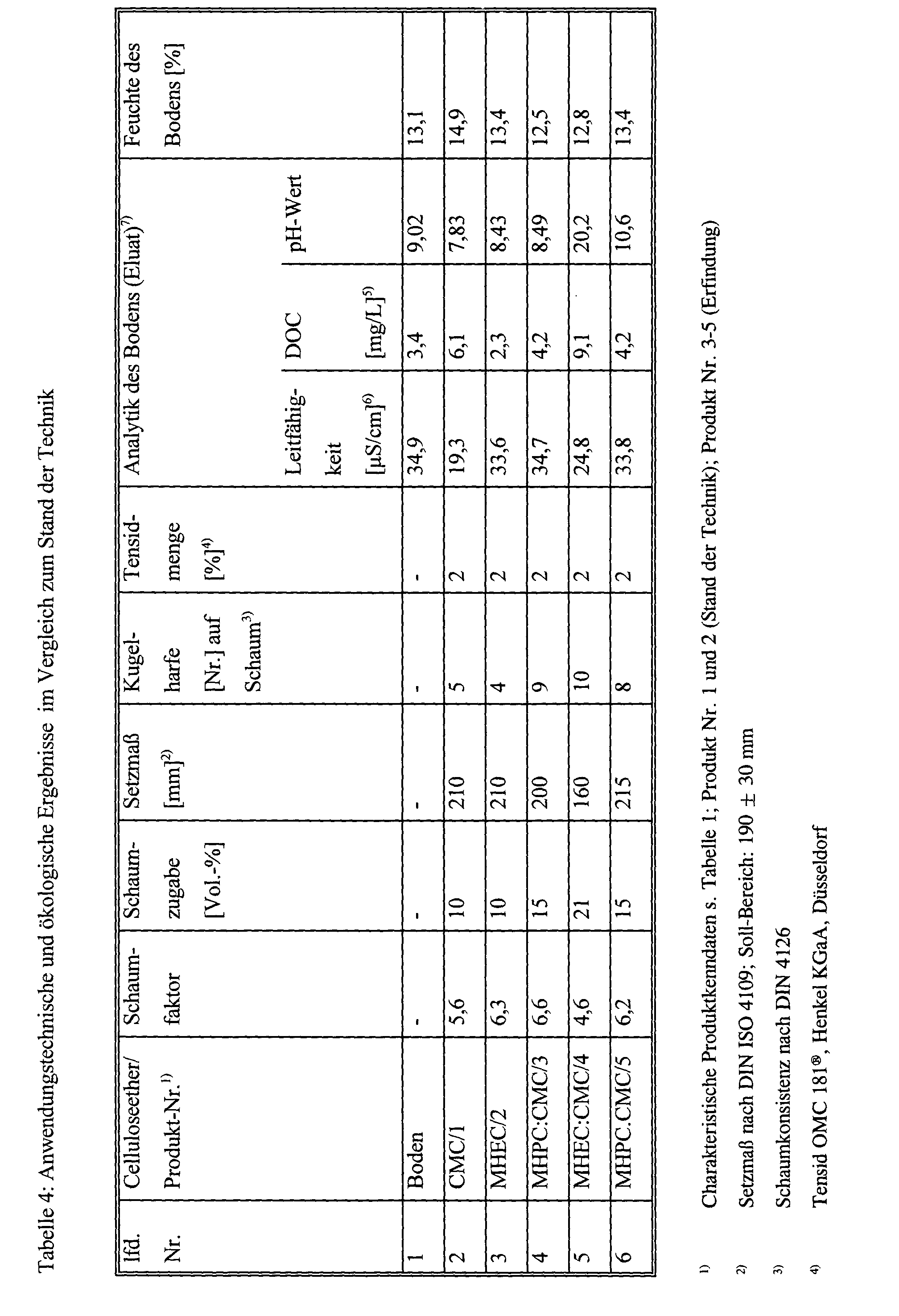

⁵⁾ Im Eluat des Bodens bzw. Boden-Schaumgemisches enthaltener gelöster organisch gebundener Kohlenstoff (DIN 38409 H3-1)
⁶⁾ Leitfähigkeit nach DIN 38404 C5 aus dem Eluat
⁷⁾ Leitfähigkeit, DOC und pH-Wert aus dem Eluat (Zentrifugat 2800 Umdrehungen/3 Min.). Eluat nach DIN 38414 S4 (ca. 100g Trockenmasse pro 1 L Wasser; Dauer 24 (h), 10 UpM).

## Patentansprüche

1. Hilfsmittel für Bohrspülanwendungen aus mindestens einem nicht-ionischen Polysaccharidether, und mindestens einem ionischen Polysaccharidether, und mindestens einer oberflächenaktiven Substanz sowie mindestens einem unveredelten, natürlichen Polysaccharid.

2. Hilfsmittel nach Anspruch 1, **dadurch gekennzeichnet, daß** der Anteil des nicht-ionischen Polysaccharidethers, bezogen auf die Summe aus ionischem und nicht-ionischem Polysaccharidether 0,1 - 99,0 Gew.-%, insbesondere 1 - 99 Gew.-%, vorzugsweise 10 - 90 Gew.-% beträgt.

3. Hilfsmittel nach einem der Ansprüche 1 oder 2, **dadurch gekennzeichnet, daß** es sich bei dem nicht-ionischen Polysaccharidether um Alkylcellulosen, Alkylhydroxyalkylcellulosen, Hydroxyalkylcellulosen oder alkylierte oder hydroxyalkylierte Stärkeether handelt.

4. Hilfsmittel nach einem der Ansprüche 1 bis 3, **dadurch gekennzeichnet, daß** es sich bei dem ionischen Polysaccharidether um Carboxyalkyl- oder Carboxyalkylhydroxyalkylcelluloseether oder um carboxyalkylierte- oder carboxyalkylhydroxyalkylierte Stärkeether oder carboxyalkylierte Guarether handelt.

5. Hilfsmittel nach einem der Ansprüche 1 bis 4, **dadurch gekennzeichnet, daß** es sich bei dem nicht-ionischen Polysaccharidether um Methylcellulose, Ethylcellulose, Methylhydroxyethylcellulose, Methylhydroxypropylcellulose, Ethylhydroxyethylcellulose, Ethylhydroxypropylcellulose, Hydroxyethyl-, Hydroxypropyl- oder Hydroxyethylhydroxypropylcellulose handelt.

6. Hilfsmittel nach einem der Ansprüche 1 bis 5, **dadurch gekennzeichnet, daß** es sich bei dem ionischen Polysaccharidether um Carboxymethylcellulosen, Carboxymethylhydroxyethylcellulosen oder Carboxymethylhydroxypropylcellulosen handelt.

7. Hilfsmittel nach einem der Ansprüche 1 bis 6, **dadurch gekennzeichnet, daß** es sich bei der verwendeten oberflächenaktiven Komponente um Aniontenside, Kationtenside, nichtionische Tenside oder Amphotenside handelt.

8. Hilfsmittel nach einem der Ansprüche 1 bis 7, **dadurch gekennzeichnet, daß** es sich bei dem unveredelten, natürlichen Polysaccharid um Xanthan, Stärken, Guar, natürliche Gummi, Johannisbrotkernmehl, Traganth, Tamarinde, Alginate, Proteine, insbesondere aber um Cellulosechemiezellstoffe, wie Linters-, Nadelholz-Sulfit-, Nadelholz-Sulfat-, Laubholzzellstoffe oder Gemische hieraus handelt.

9. Verwendung eines Hilfsmittels gemäß einem der Ansprüche 1 bis 8 als schaumgenerierende oder schaumstabilisierende Komponenten im Tunnelbau mit Schildvortriebstechnik, insbesondere für mit Erddruck betriebene Schilde eingesetzt werden.

10. Verwendung nach Anspruch 10, **dadurch gekennzeichnet, daß** es sich bei dem nicht-ionischen Polysaccharidether um Alkylcellulosen, Alkylhydroxyalkylcellulosen, Hydroxyalkylcellulosen, hydroxyalkylierte oder alkylierte Stärkeether handelt.

11. Verwendung nach Anspruch 9 oder 10, **dadurch gekennzeichnet, daß** es sich bei dem nicht-ionischen Polysaccharidether um Methylcellulose, Ethylcellulose, Methylhydroxyethylcellulose, Methylhydroxypropylcellulose, Ethylhydroxyethylcellulose, Ethylhydroxypropylcellulose, Hydroxyethyl-, Hydroxypropyl- oder Hydroxyethylhydroxypropylcellulose handelt.

12. Verwendung entsprechend Anspruch 9, **dadurch gekennzeichnet, daß** es sich bei dem ionischen Polysaccharidether um Carboxyalkyl- oder Carboxyalkylhydroxyalkylcelluloseether und um carboxyalkylierte- oder carboxyalkylhydroxyalkylierte Stärkeether oder carboxyalkylierte Guarether handelt.

13. Verwendung nach Anspruch 9 oder 12, **dadurch gekennzeichnet, daß** es sich bei dem ionischen Polysaccharidether um Carboxymethylcellulose, Carboxymethylhydroxyethylcellulosen oder Carboxymethylhydroxypropylcellulosen handelt.

## Claims

1. Auxiliary substance for drilling fluid applications comprising at least one nonionic polysaccharide ether and at least one ionic polysaccharide ether and at least one surface-active substance together with at least one unrefined, natural polysaccharide.

2. Auxiliary substance according to claim 1, **characterised in that** the proportion of the nonionic polysaccharide ether, relative to the sum of ionic and nonionic polysaccharide ether is 0.1-99.0 wt.%, in particular 1-99 wt.%, preferably 10-90 wt.%.

3. Auxiliary substance according to one of claims 1 or 2, **characterised in that** the nonionic polysaccharide ether comprises alkylcelluloses, alkylhydroxyalkylcelluloses, hydroxyalkylcelluloses or alkylated or hydroxyalkylated starch ethers.

4. Auxiliary substance according to one of claims 1 to 3, **characterised in that** the ionic polysaccharide ether comprises carboxyalkyl- or carboxyalkylhydroxyalkylcellulose ethers or carboxyalkylated or carboxyalkylhydroxyalkylated starch ethers or carboxyalkylated guar ethers.

5. Auxiliary substance according to one of claims 1 to 4, **characterised in that** the nonionic polysaccharide ether comprises methylcellulose, ethylcellulose, methylhydroxyethylcellulose, methylhydroxypropylcellulose, ethylhydroxyethylcellulose, ethylhydroxypropylcellulose, hydroxyethyl-, hydroxypropyl- or hydroxyethylhydroxypropylcellulose.

6. Auxiliary substance according to one of claims 1 to 5, **characterised in that** the ionic polysaccharide ether comprises carboxymethylcelluloses, carboxymethylhydroxyethylcelluloses or carboxymethylhydroxypropylcelluloses.

7. Auxiliary substance according to one of claims 1 to 6, **characterised in that** the surface-active component used comprises anionic surfactants, cationic surfactants, nonionic surfactants or amphoteric surfactants.

8. Auxiliary substance according to one of claims 1 to 7, **characterised in that** the unrefined, natural polysaccharide comprises xanthan, starches, guar gum, natural rubber, carob flour, tragacanth gum, tamarind, alginates, proteins, but in particular chemical cellulose pulps, such as linters, softwood sulfite, softwood sulfate, hardwood pulps or mixtures thereof.

9. Use of an auxiliary substance according to one of claims 1 to 8 as a foam-generating or foam-stabilising component in tunnelling using the shield driving method, in particular for shields operated with earth pressure.

10. Use according to claim 10, **characterised in that** the nonionic polysaccharide ether comprises alkylcelluloses, alkylhydroxyalkylcelluloses, hydroxyalkylcelluloses, hydroxyalkylated or alkylated starch ethers.

11. Use according to claim 9 or 10, **characterised in that** the nonionic polysaccharide ether comprises methylcellulose, ethylcellulose, methylhydroxyethylcellulose, methylhydroxypropylcellulose, ethylhydroxyethylcellulose, ethylhydroxypropylcellulose, hydroxyethyl-, hydroxypropyl- or hydroxyethylhydroxypropylcellulose.

12. Use according to claim 9, **characterised in that** the ionic polysaccharide ether comprises carboxyalkyl- or carboxyalkylhydroxyalkylcellulose ethers and carboxyalkylated or carboxyalkylhydroxyalkylated starch ethers or carboxyalkylated guar ethers.

13. Use according to claim 9 or 12, **characterised in that** the ionic polysaccharide ether comprises carboxymethylcellulose, carboxymethylhydroxyethylcelluloses or carboxymethylhydroxypropylcelluloses.

## Revendications

1. Adjuvant pour des utilisations dans le forage avec injection d'eau comprenant au moins un éther de polysaccharide non ionique, et au moins un éther de polysaccharide ionique, et au moins une substance tensioactive ainsi qu'au moins un polysaccharide naturel non purifié.

2. Adjuvant selon la revendication 1, **caractérisé en ce que** la quantité de l'éther de polysaccharide non ionique, rapportée à la somme des éthers de polysaccharide ionique et non ionique est 0,1 - 99,0% en poids, en particulier 1 - 99% en poids, de préférence 10 - 90% en poids.

3. Adjuvant selon une des revendications 1 ou 2, **caractérisé en ce que** les éthers de polysaccharides non ioniques sont les alkylcelluloses, les alkylhydroxyalkylcelluloses, les hydroxyalkylcelluloses ou les éthers d'amidon alkylés ou hydroxyalkylés.

4. Adjuvant selon l'une des revendications 1 à 3, **caractérisé en ce que** les éthers de polysaccharides ioniques sont des éthers de carboxyalkylcellulose ou des éthers de carboxyalkylhydroxyalkylcellulose ou des éthers d'amidon carboxyalkylés ou carboxyalkylhydroxyalkylés ou des éthers de gomme guar carboxyalkylés.

5. Adjuvant selon l'une des revendications 1 à 4, **caractérisé en ce que** les éthers de polysaccharides non ioniques sont la méthylcellulose, l'éthylcellulose, la méthylhydroxyéthylcellulose, la méthylhydroxypropylcellulose, l'éthylhydroxyéthylcellulose, l'éthylhydroxypropylcellulose, l'hydroxyéthylcellulose, l'hydroxypropylcellulose ou l'hydroxyéthylhydroxypropylcellulose.

6. Adjuvant selon l'une des revendications 1 à 5, **caractérisé en ce que** les éthers de polysaccharides ioniques sont la carboxyméthylcellulose, la carboxyméthylhydroxyéthylcellulose ou la carboxyméthylhydroxypropylcellulose.

7. Adjuvant selon l'une des revendications 1 à 6, **caractérisé en ce que** les composants tensioactifs utilisés sont des tensioactifs anioniques, des tensioactifs cationiques, des tensioactifs non ioniques ou des tensioactifs amphotères.

8. Adjuvant selon l'une des revendications 1 à 7, **caractérisé en ce que** les polysaccharides naturels non purifiés sont le xanthane, l'amidon, la gomme guar, la gomme naturelle, la farine de caroube, l'adragante, le tamarin, l'alginate, les protéines, mais en particulier des produits cellulosiques chimiques, comme par exemple les celluloses de linters, de sulfite de résineux, de sulfate de résineux et de feuillus ou des mélanges de ceux-ci.

9. Utilisation d'un adjuvant selon l'une des revendications 1 à 8,
**caractérisée en ce que** qu'on utilise comme composants formant de la mousse ou stabilisant la mousse dans la construction de tunnel avec la technique d'avance de bouclier, en particulier avec un bouclier travaillant avec pression de terre.

10. Utilisation selon la revendication 9, **caractérisée en ce que** les éthers de polysaccharides non ioniques sont des alkylcelluloses, des alkylhydroxyalkylcelluloses, des hydroxyalkylcelluloses, des éthers d'amidon hydroxyalkylés ou alkylés.

11. Utilisation selon la revendication 9 ou 10, **caractérisée en ce que** les éthers de polysaccharides non ioniques sont la méthylcellulose, l'éthylcellulose, la méthylhydroxyéthylcellulose, la méthylhydroxypropylcellulose, l'éthylhydroxyéthylcellulose, l'éthylhydroxypropylcellulose, l'hydroxyéthylcellulose, l'hydroxypropylcellulose ou l'hydroxyéthylhydroxypropylcellulose.

12. Utilisation selon la revendication 9, **caractérisée en ce que** les éthers de polysaccharides ioniques sont des éthers de carboxyalkylcellulose ou des éthers de carboxyalkylhydroxyalkylcellulose et des éthers d'amidon carboxyalkylés ou carboxyalkylhydroxyalkylés ou des éthers de gomme guar carboxylalkylés.

13. Utilisation selon la revendication 9 ou 12, **caractérisée en ce que** les éthers de polysaccharides ioniques sont la carboxyméthylcellulose, la carboxyméthylhydroxyéthylcellulose ou la carboxyméthylhydroxypropylcellulose.
